# EUROPEAN PATENT SPECIFICATION

(11) **EP 2 763 127 B1**
(45) Date of publication and mention of the grant of the patent: **28.02.2018**
(21) Application number: 12823896.1
(22) Date of filing: 18.05.2012
(51) Int. Cl.: G09F 23/00, G09F 21/04, B60N 3/02, G09F 1/12

(54) **IMPROVEMENTS MADE TO THE STRUCTURAL DESIGN OF A MESSAGE-CONVEYING DEVICE, WITH THE PROVISION OF A THROUGH-COMPARTMENT FOR ONE MEDIUM TO BE REPLACED BY THE INSERTION OF ANOTHER, OR THE PROVISION OF A CUT-OUT**
VERBESSERUNGEN AN DER KONSTRUKTIONSAUSFÜHRUNG EINER NACHRICHTENSENDEVORRICHTUNG MIT BEREITSTELLUNG EINES DURCHGANGSFACHS FÜR EIN DURCH EINFÜGEN EINES ANDEREN MEDIUMS ZU ERSETZENDES MEDIUM ODER ZUR BEREITSTELLUNG EINER AUSSCHNEIDUNG
AMÉLIORATIONS APPORTÉES À LA CONCEPTION STRUCTURALE D'UN DISPOSITIF VÉHICULANT DES MESSAGES, CONSISTANT À LE DOTER D'UN COMPARTIMENT TRAVERSANT POUR LE REMPLACEMENT D'UN SUPPORT PAR INSERTION D'UN AUTRE SUPPORT, OU D'UN ÉVIDEMENT

(30) Priority: 17.08.2011 BR 9101692 U
(43) Date of publication of application: 06.08.2014
(73) Proprietor: Pacheco, Antonio Ricardo, 86078-693 Londrina, PR (BR)
(72) Inventor: Pacheco, Antonio Ricardo, 86078-693 Londrina, PR (BR)
(74) Representative: Silvestre de Almeida Ferreira, Luís Humberto
(86) International application number: PCT/BR2012/000151
(87) International publication number: WO 2013/023259

(56) References cited:
- EP-A1- 1 671 840
- EP-A1- 1 671 840
- EP-A1- 2 186 677
- WO-A1-93/02891
- BR-U- MU8 800 411
- DE-U1-202005 017 216
- US-A1- 2010 095 567
- US-A1- 2010 115 809

## Description

### INTRODUCTION

The present specification discloses constructive improvements as proposed to facilitate the insertion and substitution of printed media without the need to disassemble the showcase, appropriate for coupling to pre-existing handrails in public transport vehicles.

Therefore, it is a device wherein the support handle for passengers/users is integrated to the showcase itself which, molded with transparent plastic, allows the visual access to the advertising piece from both faces of the showcase. Document EP 1671840 shows a message-carrying device according to the preamble of claim 1, in which printed media is inserted within one of the side slits as included in a showcase, expelling the media to be substituted through the other slit, since the compartment for the media piece is a passage with perfect measurements to both keep the media packed and to release it by inserting the new media.

In the invention, by means of the same operation, i. e. the insertion of new media, the substitution of the previous media piece is made by activating a guiding device, which is presented in at least two different forms of embodiment. The first embodiment provides a button-shaped device for manual operation which, once pressed, displaces and guides the media as present in the compartment to the exit line of the side slit; and, in the second embodiment, the device consists of a transparent sheet provided on one of the sides of the showcase, provided with a folding sector and configuring a platform with a guiding slope for the exit of media through the side slit, also activated by hand pressure, constituting one of the two visual access walls of the showcase itself. In both cases, the passage compartment is provided with a compartment in the form of a cavity or recess where the media is received and lodged for exhibition.

The device as thus conceived is able to facilitate the substitution of the printed media without disassembling or opening the showcase, as it usually happens in cases where it is a double-face type, only requiring the introduction of new media through one of the side slits as included in the showcase to allow to expel the media to be substituted through the slit as included on the opposite side, wherein the compartment containing the media is provided with a guide to conduct the media to the exit slit by means of the manual pressure device, as proposed or in the form of a hand-activated button or a sheet configuring a slope, both guiding the media as present in the cavity-shaped compartment to the access line for the exit slit, thus facilitating and making the substitution or updating operation for the printed media as shown by the message showcase become more practical.

Therefore, the present specification refers to enhancements which, as introduced in the basic embodiment of the INFORMATIVE HANDLE COUPLED TO THE SAFETY HANDRAIL OF PUBLIC TRANSPORT VEHICLES, as taught by the patent BRMU880255-1 U2, dated November 5 13, 2008, owned by the present Applicant, widen and improve the functional concept of said object, thus facilitating the substitution and/or updating procedure for media pieces.

### STATE OF THE ART

Showcases for advertising messages, appropriate for coupling to the upper bar or handrail as existing in public transport vehicles, as inferred from the searches as commented below, are widely known in the common practice.

However, said devices either require complex methods to be operational, notably for the substitution or updating of media, requiring the showcase to be disassembled or the use of a special tool, or depend on electric or electronic devices for their operation.

This is why we could find documents involving various operational concepts in the searches conducted in the state of the art and commented below. After disconsidering those which operation follows a different concept, we selected the following patents:
US1010133A, filed on December 19, 1910, under the title: STREET CAR STRAP. This is an equipment for use in public transport vehicles, aiming to release an antiseptic, disinfectant or germicide fluid on manual contact parts.

US1812972, filed on May 29, 1930, under the title: HANDLE FOR STREET CAR STRAPS. Its main object is to show advertising material (19), in fact printed matter in the shape of a card or similar as present on the frame configured by the flaps (14 and 15), both provided on the wall (16) on which the handle (3) itself is molded.

US2277088A, filed on August 7, 1939, under the title: ADVERTISING STRAP HANGER. This is a stationary hangershaped rack with a belt, comprising a lighted advertising board, as well as electric lamps, an electric circuit including an energy source and also a stationary contact switch.

JP06127380A, filed on May 10, 1994, highlights the fitting of two transparent parts over the length of the sustaining belt of a hanging handle or ring for public transport vehicle passengers, so that, between each one of the fitted parts and the belt, na advertising card has been inserted and can be seen. Said fitting parts constitute a body (b) formed by the exhibition sectors 6, 7 made of a transparent resin, in fact front walls 8 forming two portions of a side wall 9. Upper and lower collars 10, 13 and side walls 12 are provided on the wall 9. Between said parts and the belt, cards (c) with the messages to be advertised printed on them are inserted. Other aspects of the embodiment refer to the front wall 8', to the recessed part 13' on the side wall and also to points 9' and 10, among others.

DE20309342U1, filed on June 17, 2003, under the title: ADVERTISING DEVICE (WERBEMOGLICHKEIT IN HALTESCHLAUFE). It discloses a safety belt for local traffic vehicles, comprising two elements made of transparent plastic (2, 4) welded to each other and including a printed advertisement carrier (3).

CA2453679A1, filed on June 18, 2003, under the title: ADVERTISING DISPLAY FOR PUBLIC TRANSPORT VEHICLES AND BUSES (AFFICHAGE PUBLICITAIRE POUR AUTOBUS ET AUTRES VEHICULES DE TRANSPORT EM COMMUN). It discloses a display as installed on one of the sides of the fixing element for the safety belt to the upper handrail, merely comprising a side panel fixed with screws and nuts.

DE202005012035U1, filed on July 28, 2005, under the title: HANDLE ESPECIALLY CONCEIVED FOR FIXED OPERATION IN TRANSPORT VEHICLES (HALTEGRIFF, INSBESONDERE FUR FESTHALTESCHLAUFEN IN FAHRZEUGEN). It teaches a belt (12) and a fitting consisting of two halves (14a, 14b) which may be coupled to each other by means of a fitting and pin arrangement.

DE202006005138U1, filed on March 29, 2006, under the title: FIXED HANDLE (HALTESCHLAUFE). It highlights a device with an analogous concept to the object of the presente application, but not provided with a means for access or substitution of the media being shown, so that the media as contained between both faces forming the set can only be inserted or taken off by disassembly. Furthermore, the passenger support means is given by a common use belt.

US2009/0134613A1, filed on December 19, 2006, under the title: HANGING STRAP. It claims an insertion device through which the media is pulled in a carrier to within a gutter (10) provided on the protection caps (8a, 8b), i. e. a supporting belt (2) fixed by a lace (1) for one person, provided with a compartment formed by at least two individual faces (3a, 3b) limited on the higher (4a, 4b) and lower (5a, 5b) sectors. This means that it is clear that the insertion of media requires disassembling the faces (3a, 3b) and using a transporting device and, also, the belt passes through the showcase, which requires the insertion of two media pieces, one at each side, unless the message is to be seen from only one side of the showcase.

DE102007057590A1, filed on November 28, 2007, under the title: HOLDER FOR A TITLE WITH INFORMATION (HALTEVORRICHTUNG MIT INFORMATIONSTRÄGER). It discloses a device (1) comprising fixing means (3) over the handrail (4), a spacer (5) and holder (6), wherein the retention device (1) holds information (7) on at least one part of the spacer (5). As inferred from the description, the so-called spacer (5) is proposed under various shapes of embodiment, including pyramids. Connecting and fixing means are obtained by gluing, screws or other conventional connection devices and may be dischargeable or permanent, or also consist of a special tool or key avoiding non-authorized or acidental release. Concerning the so-called spacer (5), there is an end projection (29) on the opposite side to the projection (28) for its introduction to the fixing means (3), being then screwed, glued or fixed in another way, while the information support (7) may have a recess within which a poster or leaflet will be positioned, or it may be printed, painted or have a sticker on its surface. Furthermore, the information support (7) is provided with light sources, such as LEDs, etc., to illuminate the information, or an electronic screen or monitor, and also a tracing system which can work synchronously so to offer messages from stores near to the place where the transport vehicle may be. Concerning the non electronic embodiment, the support (7) is provided with a cavity (38) in which the information piece is introduced.

WO2008/089603, filed on July 31, 2008, under the title: A ROTATABLE ADVERTISEMENT HANDGRIP. It teaches a handgrip containing rotating advertisements, consisting of two frontal faces forming a handle (1), wherein there are transparente chambers (2), with the set having a hinged connection to the bar or handrail as present in public transport vehicles. The object is to provide the user with the publication of a message together with the support itself.

BRMU880661-1 U2, filed on September 5, 2008, under the title EMBODIMENT APPLIED TO AN UPPER GRAB HANDLE WITH ADVERTISING SPACE FOR PUBLIC TRANSPORT (DISPOSIÇÃO CONSTRUTIVA APLICADA EM ALÇA DE PEGA SUPERIOR COM ESPAÇO PUBLlCITÁRIO PARA TRANSPORTES COLETIVOS). It comprises a main body formed by a support with rounded edges, which lower section has, in its center, a grab support, provided with ridges and cavities, forming an anatomic section, wherein, above the cavity, there is a display to insert advertisements, through the cavity located on its side, wherein the upper section of the handle is provided with a plug receiving a cover fixed to a coupled handle in a pin provided inside the grab loop provided with a passage hole to couple the grab bars.

BRMU8802555-1 U2, filed on November 13, 2008, under the title INFORMATION HANDLE COUPLED TO THE SAFETY HANDRAIL FOR PASSENGER TRANSPORT VEHICLES (ALÇA INFORMATIVA ACOPLADA AO CORRIMÃO DE SEGURANÇA DE VEÍCULOS DE TRANSPORTE DE PASSAGEIROS). It refers to an embodiment solution including a panel (1) carrying a message which, molded in translucid material, has a lower handle (4) intended to give the user more comfort and safety while standing on travel, no longer holding directly the safety handrail, but rather grabbing, with one of his/her hands, the anatomic part (6) included in said handle (4). Said panel (1) and handle (4) are fixed to the safety handrail by a device (3) provided with a passage hole (5) receiving the handrail, with a flexible belt (7) making the link between the panel (1) and the device (3), giving the required balance to the set.

BRMU8901506-1 U2, filed on June 12, 2009, under the title ARRANGEMENT INTRODUCED IN A HINGED HANDLE FOR SUPPORT OF PASSENGERS IN PUBLIC VEHICLES (DISPOSIÇÃO INTRODUZIDA EM ALÇA SUSPENSA PARA APOIO DE PASSAGEIROS EM VEÍCULOS COLETIVOS). It discloses a main body (2) obtained by means of injection of transparent polycarbonate, predominantly rectangularly-shaped, containing on its upper portion a rectangular projection (3) with low thickness, joined to an engaging device similar to an armrest (4), developed to be fixed to horizontal cylindrical bars (5) of public transport vehicles; the main body (2) has a rectangular geometry with low thickness, wherein about two thirds of its upper portion have a recessed area (6) with a rectangular and flat shape, and the remaining lower portion has a rectangular opening (7), which lower segment (8) has, on its upper face, sinoidal ridges or waves (9), compatible with fingers, forming na anatomic profile. We should highlight that the advertising piece (11) is inserted through an opening (12) included on the side face.

US2010/0095567 A1, filed on April 22, 2010 under the title WRISTBAND WITH ADVERTISING AREAS (PUNHO COM AREAS DE PUBLICIDADE). It highlights an advertisement showing device for use in buses, subway and similar. The device can be easily installed and removed from a handrail and can help people to better and more easily grab them than on handrails. This device has a fixed part and a linking handle by a knitted band ring. The device has five spaces to fix advertising sheets and for leaflet distribution. Sheets and leaflets can be removed from the place where they are inserted.

After verifying the documents included in the state of the art, we can verify that, although some of them have similar operational concepts, we intend that the present object effectively has a new shape or arrangement, involving inventive activity resulting in functional improvement for the use and manufacture of handles provided with a showcase for printed media, since the function to substitute or update the media is implemented by the fact that the slits as included on both sides of the showcase constitute a passage compartment, so that the media piece is inserted through the slit tear of access and later substituted or updated by inserting a new piece. We should highlight that the insertion of new media expels the previous media through the exit slit, which is determined both by the measurements of the passage compartment and by the use of specific devices conducting the media to be substituted until the exit line corresponding to the opposed side slit, and these characteristics are not found in any of the anteriorities as taught by the state of the art.
An example is the document BRMU8901506-1 U2 which, despite being anticipated by the document BRMU8802555-1 U2 owned by the present Applicant, informs the existence of one single opening as included on the side face (12), through which, obviously, the advertising piece is inserted and taken off.
This is also the case of the document BRMU8800661-1 U2, wherein one single access to the showcase is equally included, called display (9), i. e. a "cavity (10) included on the s ide (11)", which means that the function to substitute or update the media requires the disassembly of the showcase or the use of a special tool. Furthermore, the present object also improves the state of the art because, as we can see from the related documents, existing devices require electric/electronic parts for their operation, as it is the case with the documents US2277088A and DE102007057590A1, contemplating complex devices for its construction or which are complex or inefficient to substitute or update the media as presented, which can only be made by opening the showcase, which sometimes is done by using special tools or by disassembling the showcase.

As an example, the concept as proposed in document DE102007057590A1, wherein the media is inserted from above to below in a vertical cavity, as well as the external frame as included in document US1812972, wherein the media is inserted within side flaps, is inefficient.

On the other hand, the media substitution and update operation in documents JP06127380A, DE202005012035U1 and DE20309342U1, wherein two faces are fitted over the preexisting belt and the printed media is put between two layers forming the belt or handle, respectively, is too complex. This is also the case of the document CA2453679A1, wherein the function to substitute or update the media includes the substitution of the showing panel itself.

Therefore, the listed documents, despite presenting a similar operational concept, are improved by the object at issue. This is the case of document US1812972, over which the presente object eliminates the use of an external frame for the printed media, which is included in the transparent showcase so to be viewed from both sides, which does not occur in the case of the mentioned document, wherein the message can be visually accessed by only one side of the showcase.

On the other hand, concerning the document JP06127380A, disclosing an advertising panel (b) formed by two parts (6, 7) made of a transparent resin, able to contain an advertising message (c) next to (b, c) being positioned over the connection band and the handle (1) and the supporting bar of a public transport vehicle, the object of the present application has a functional improvement since the advertising panel (1) is incorporated to the handle (4), thus simplifying the substitution procedure for the printed media, since the need to disconnect fitted parts (6, 7) is eliminated and the viewing area is increased, being also in a new horizontal position.

Concerning document CA2453679A1, regarding a traditional support device (2) with a hinged handle, comprising a fixing ring (6) for application to a support bar of a public means of transport, a locking ring (4) for a user of said public transport, an intermediate part (8) provided with a hole (9) and a rectangular plate (10) of plastic, fixed to said support device (2) by means of a connection system (14) over which na advertising message (12) is printed or fixed, wherein the improvements included herein substitute the rectangular plate as mechanically fixed, which can only be viewed from one of the sides, with the transparent showcase which is visually accessible from both sides, which concept, thanks to the presence of side inlet and exit slits, allows to substitute and update the media by the mere insertion of the new advertising piece, while, in case of the document in reference, the substitution of the message means the substitution of the plate or panel itself. Concerning document DE202006005138U1, referring to a device assembled on two plastic faces connected by a fixing device or by screws, rivets or similar means, which are crossed by the support belt, meaning the need of introduction of both medias, one from each side, the object of the present application introduces side slits constituting the access means for substitution and update of the media as contained in the showcase without disassembling the device and eliminating the belt passing through the showcase, substituting it with the anatomic wristband shaped from the showcase itself.
Concerning document US2009/0134613A1, presenting an identical object to the document DE202006005138U1, which is unique for providing an insertion device from which the media is pulled into a carrier to within a gutter (10) included on the protection caps (8a, 8b), improvements as included herein introduce side tears allowing the media to enter through one hole and exit through the other one, which does not happen in the case of the document in reference, which only includes an inlet sector and assumes the use of a transporting device, wherein the disassembly of the parts of the device is unavoidable, such as in the document DE202006005138U1.

Concerning the document DE102007057590A1, despite its object contemplates a similar concept to the present application, it is improved by the present application since the cavity (38) wherein the informational piece is introduced from above to below and substituted through the side slits as included in the showcase thus improved, since the substitution of the media, in case of document DE102007057590A1, is only mechanically possible by disassembling the support (7), as said cavity (38) is not a passage or horizontally projected. Furthermore, it is a document published between the date of filing of the presente application and the date of priority as claimed herein, which means that it does not anticipate the patent as claimed herein.
Concerning the document WO2008/089603, teaching a wristband comprised by a handle (1) turning over the support bar and over which transparent containers (2) are located to include advertising notices, the state of the art is innovated by the ergonomic handle (4), fixed to the fastening loop (3) by means of a flexible connection (7).
Specifically concerning documents DE202006005138U1 and US2009/0134613A1, bearing in mind that the matter as claimed is substantially identical, except for the latter one including an insertion device, through which the media is pulled into a carrying device to within a gutter, which is a hanging strap (1) provided with a fastening loop for application to a grab bar of a gripping loop (2) and an advertising panel comprising two elements of transparent plastic (3a, 3b) connected by means of closing fitting elements (7). Said loops (1, 2) are constituted by a band or a flat band and form a typical handle as used in public transport means, while the advertising panel (3a, 3b) is fixed to the loops (1, 2) by means of a screw or pin (6), constituting a connection element between both loops (1 and 2 in both documents), forming a typical hinged handle. However, the improvements as proposed herein configure a handle (4) which does not cross the advertising panel (1) or constitute the belt (2) of the previous document, also having the slits (8, 8b) between which the passage compartment (10) is formed.

The other patents do not show any relation with the present object, except for constituting informative means making use of the bars as available in public transport vehicles.

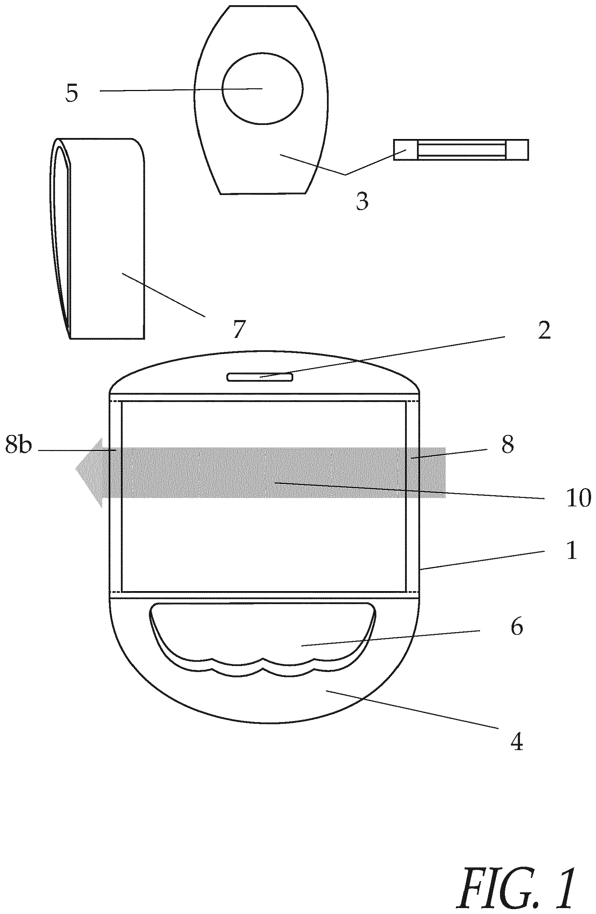

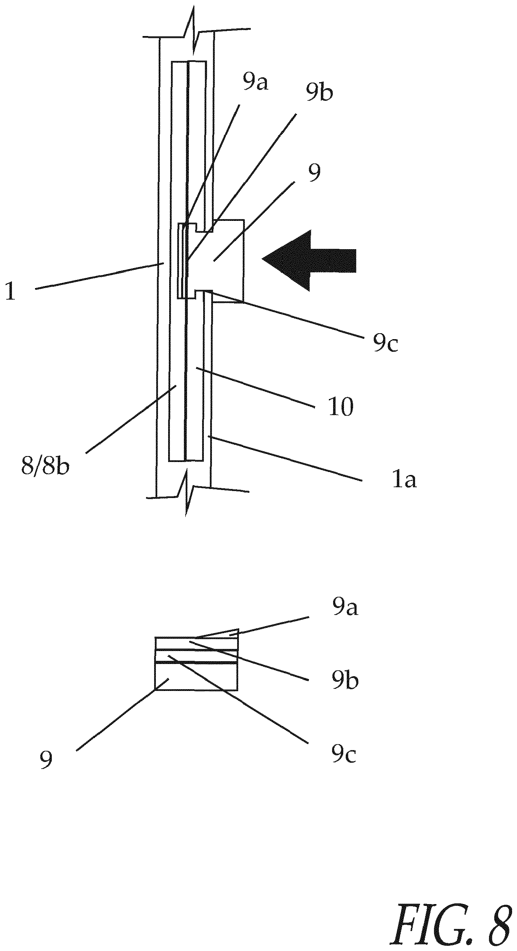

Therefore, the document US1010133A, from the assumption that the handles included in public transport vehicles are dirty and have low frequency of substitution, which, linked to the assumed lack of ventilation inside said vehicles, would constitute a threat to public health, proposes two alternative ways of embodiment (Figs. 1-7) of a hinged handle (1) to be applied to a grab bar of a public transport vehicle, provided with a disinfecting device (6) to guarantee appropriate cleaning conditions; said disinfection device is formed by two parts (9) (page 1, lines 100 to 103). The part of both which is visible to passengers is provided with catches (18) able to support an advertising message which can be alternatively printed or glued to the surface of said portion of the part (9) (page 2, lines 19 to 25). The document also shows (Fig. 8-10) a disinfecting device (23) for direct application to the grab bar (2) of a public transport vehicle (page 2, lines 40-44), which is provided with catches (33) to support an advertising message (page 2, lines 64 to 66).

Clearly, the object of the present invention is diferente from the invention as disclosed in document US 1010133A, especially because it includes a transparent advertising panel (1), but also because this same advertising panel (1) is incorporated in the handle (4) for the support of users of public transport vehicles. On the other hand, the document US2277088A discloses a support device composed by a metal structure (10) and a handle (11), wherein the metal structure (10) is provided with two transparent plates (12, 13) able to support advertising messages and having inside them a series of lamps to illuminate the plates (12, 13) when the handle (11) is fixed, which object is diferente from the showcase as disclosed herein, in fact an advertising panel (1) incorporated into the handle (4) for support to the users of public transport vehicles and also because, in case of this object, the advertising panel is flat and approximately rectangular.

The document DE20309342U1 highlights the publication of advertising messages between the elements (2, 4) forming the safety belt itself, in fact a typical handle hinged for public transport composed of two elements of transparent plastic (2, 4) welded between them, between which an advertising message (3) is positioned. We should highlight that said document, just like many of the others as mentioned herein, does not even forecast the function of substitution and/or update of the media, while the object of the present patent informs that the handle (4) is provided with anatomic sectors (6) providing an ergonomic shape, as well as the inlet and exit (8, 8b) which, linked to the chamber (10) disposition, provided with slopes (10a) or with guiding devices (9, 11), help to both take off and substitute and/or update the media as contained in the compartment (10) without the need to disassemble the showcase (1) or the use of special tools.

The document DE202005012035U1, which concept is extremely similar to the document DE20309342U1, shows a fitting device (10) with a hinged handle, composed by a belt (12) and an element constituted by two halves (14A, 14B) connectable to each other by means of a hinge and the corresponding deposit cavity for said hinges, being said element (14A, 14B) able to shape the belt (12) and over which advertising messages are carved or printed, which makes them become equally distant from the object as now claimed, thus making the advertising panel (1) be incorporated to the handle (4) and the message as published can be substituted or updated with the simple insertion of new media, eliminating the carving or printing of new messages in any part of the showcase.

Therefore, the document BRMU8802555-1 U2, wherein a panel (1) to show a message molded with translucid material is included, with a handle (4), is owned by the Applicant and improved in the object of the present application, while the document BRMU880661-1 U2, as already mentioned, covers a panel provided with an access cavity on just one of the sides of the showcase, which means that the media compartment is not a passage, thus determining that the printed media can only be substituted and/or updated either by disassembling the showcase or by using a special tool.

Therefore, the improvements as proposed bring in significant operational improvements, first because the presentation of the message itself does not require electric, electronic or any other light means, as only the transparence of the shaping material of the showcase is sufficient, and which embodiment is resolved so that the printed media is merely inserted into the showcase, which is a horizontal passage thanks to the side inlet and exit slits for media, included at each side of the showcase, meaning that the substitution or update of the media is given by the mere insertion of the new media, thanks to the plastic conformation of the showcase, or provided with a slope or guiding devices to extract the media to be substituted or taken off.

### SUMMARY OF THE OBJECT OF THE PATENT

Bearing in mind the remarks on the state of the art as disclosed above, it is an object of the present description to provide an embodiment which, when applied to an advertising device by means of a showcase coupled to the safety handrail as already included in public transport vehicles, configures a passage compartment for printed advertising pieces and provides for the substitution and/or update by the mere insertion of new media, with the use of guiding devices conducting the media to be expelled to the exit line of the corresponding slit, which is included on the opposed side to the inlet slit on the showcase. It includes two side slits, one for inlet and the other one for exit, which can communicate through the media compartment which is then a passage.

### DESCRIPTION OF THE FIGURES

The characterization of the improvements at issue is given by means of figures representing the embodiment as proposed, so that both the fixing body on the handrail and the anatomic handle and its corresponding showcase, the belt connecting them and especially the solution given to the passage compartment can be seen as clearly as required.

Figures show the preferable forms of embodiment of the product as envisioned and serve as a basis for the present description by means of numeric and consecutive references clarifying constructive and operational aspects which may have been presumed in the embodiment used, precisely determining the protection as requested. Said figures are merely illustrative and may vary, as long as they do not escape from our initial petition.

Therefore, we have:
- Figure 1 shows an exploded front view of the showcase device (1), highlighting its parts, i. e.: main body (1), belt (7) connecting the showcase (1) and the passage element (3) provided with an appropriate hole (5) to be coupled to the safety handrail, which is not shown and has common use, as well as the sector (2) receiving the belt (7), the handle (4) and the corresponding anatomic wristband sector (6), and the side slits (8, 8b) which may communicate between the chamber or compartment (10) where the printed media is positioned. An indicative arrow shows the sense of insertion and passage of media through the showcase chamber (10).

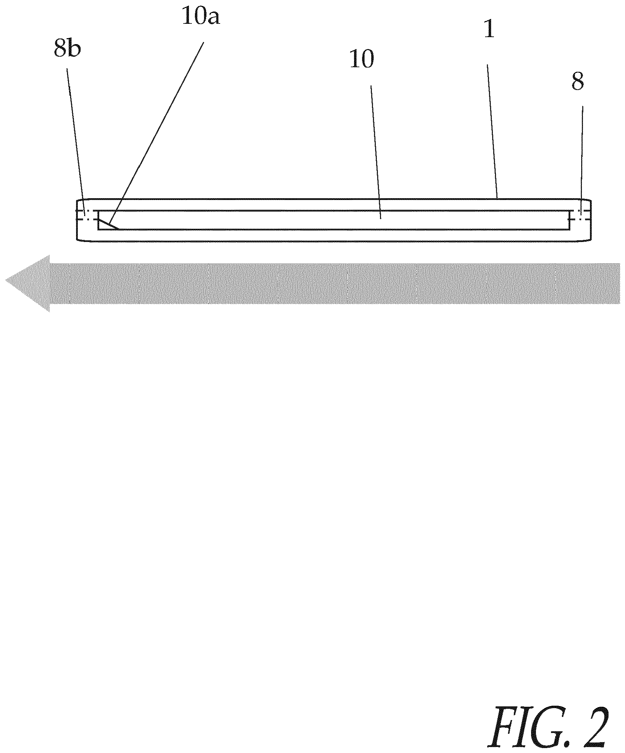

- Figure 2 discloses, in a side cut, the plastic solution for the compartment (10), i. e. a passage between the side slits (8, 8b), provided with a slope projection (10a) serving as a guide for access for media to the exit slit (8b). The indicative arrow informs the sense of passage of the media through the chamber (10) between the access (8) and exit (8b) slits.

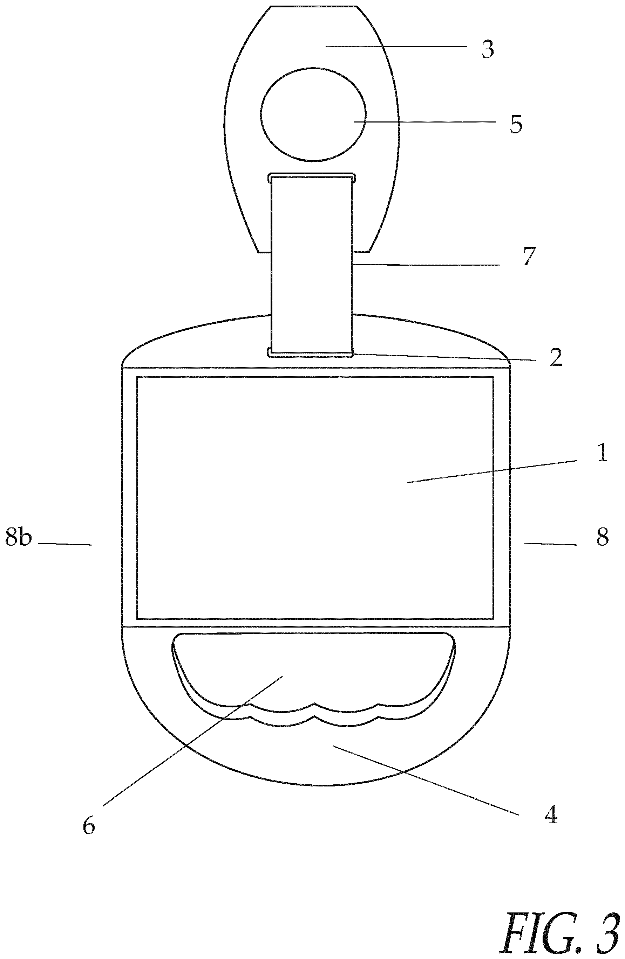

- Figure 3 shows a front view of the showcase device (1) as duly assembled.

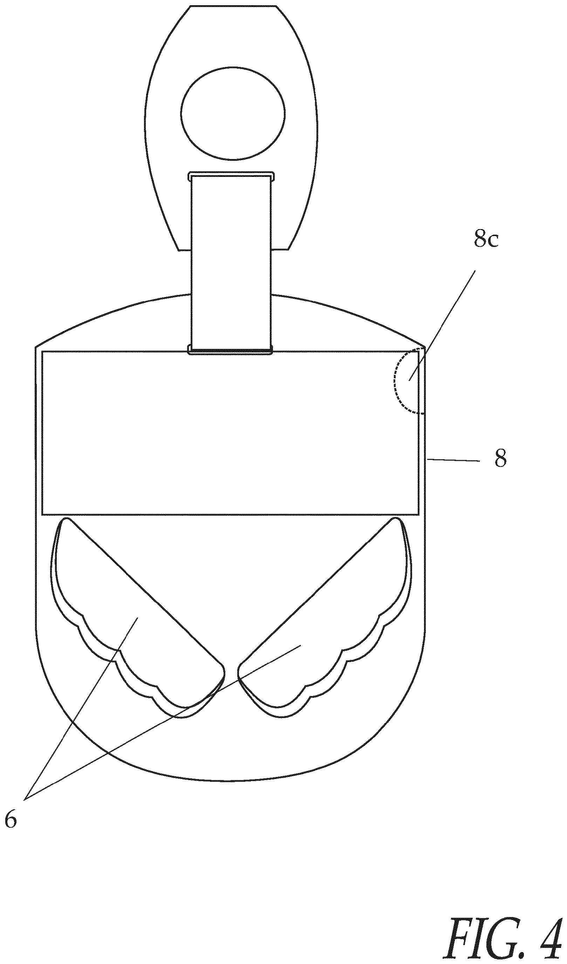

- Figure 4, still in a front view, discloses the device as assembled from an example not forming part of the invention wherein the anatomic sector (6) is conceived for the wrist of two users. The same figure also shows the position of the cut (8c), wherein the showcase is provided with just a side slit (8).

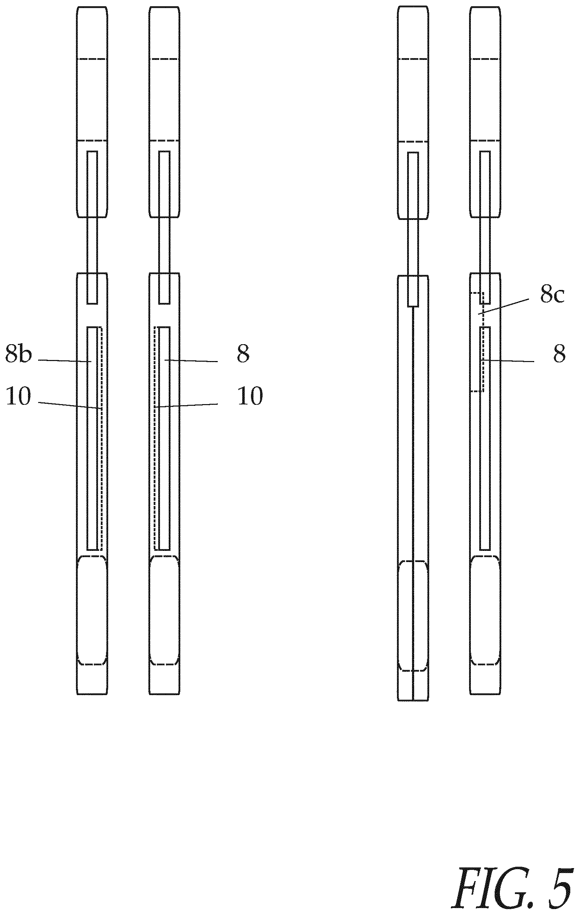

- Figure 5 shows, in successive side views, the embodiment wherein the device is provided with slits (8, 8b) on both sides and between which the compartment (10) is a passage; and wherein the embodiment includes, instead of the second side slit (8b), a cut (8c) for access to printed media.

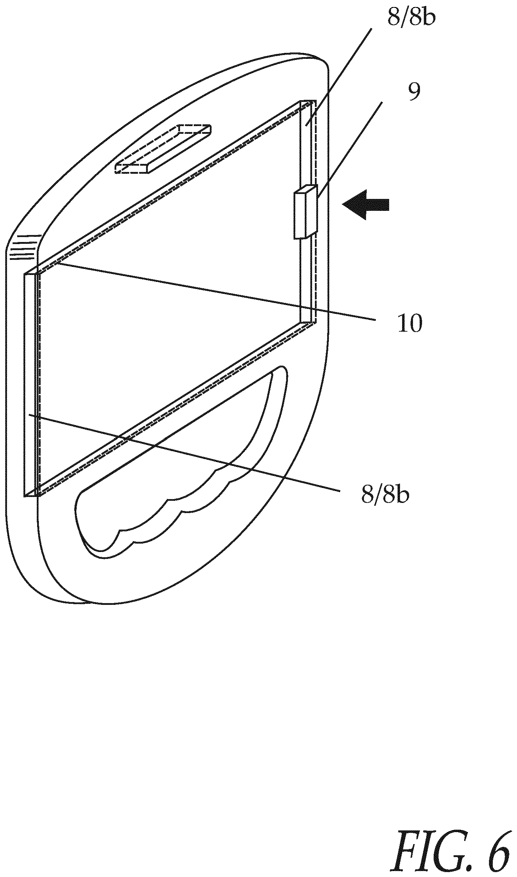

- Figure 6 specifically informs in a previous perspective the provision of a guiding device (9) and the configuration of the existing receiving chamber (10) passing through the slits (8, 8b). The same figure shows the sense of operation of the guide (9) by manual pressure, displacing the media inside the chamber (10) to the exit line through the slit (8, 8b), as per an indicative arrow.

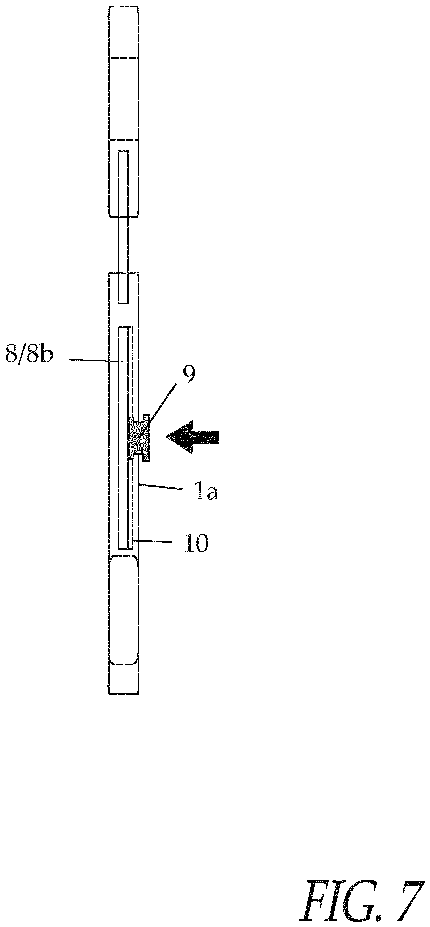

- Figure 7 shows, in a side view, an embodiment detail of the guide (9), with its course limited by the wall (1a) of the showcase (1), as well as the sense of action as per the indicative arrow.
- Figure 8 shows a side cut of the showcase (1) detailing the operational concept of the guide device (9), which action is determined by the presence of media in the chamber (10) and by the physical limit as given by the wall (1a) of the showcase (1), as well as by the action of the ridge (9a) which, once the device (9) is pressed, works as an exit guide for the media, directing it to the course line corresponding to the slit (8, 8b). The same figure offers a side view of the device (9), highlighting the guide slope (9a) projecting from the surface line (9b), as well as the neck (9c) limiting the course of the device (9) over the wall (1a) of the showcase (1).

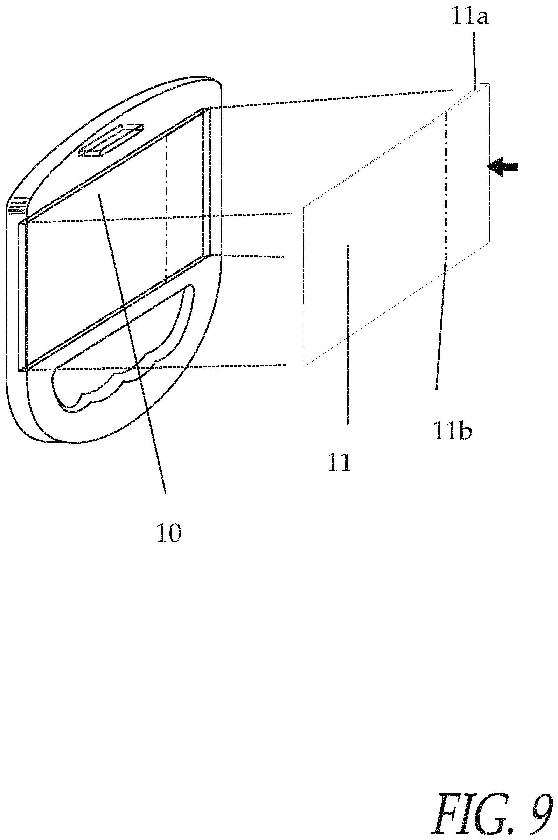

- Figure 9 shows, in an upper front view, an embodiment wherein the guiding function for the media for effects of substitution or update is made by the slope (11a) as included in the transparent display (11) as a window which may be coupled. The same figure highlights section (11b) cut or tapered so to exert manual pressure over the slope (11a) more efficiently on the sense as shown by the arrow.

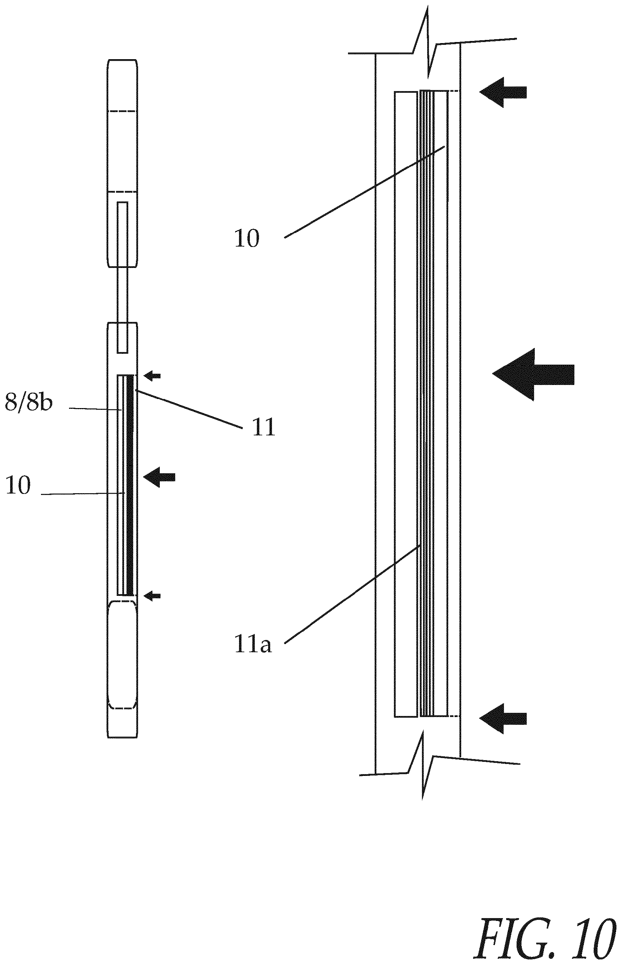

- Figure 10 shows in side and cut views the sense of coupling of the flexible display (11) over the chamber (10), and the position of the slope (11a) over the slit (8, 8b) can be seen.

### DETAILED DESCRIPTION OF THE OBJECT OF THE PATENT

The object of the present specification consists of a constructive improvement from which a safety handle appropriate for coupling to the handrail of passenger transport vehicles results, with the object to publish messages, including advertisements, which purpose to substitute or update the media is facilitated without disassembling the device, since it is provided with side tears between which a compartment is formed to enclose the media and allow its passage between one slit and the other, or a cut to access and take off the media to be substituted.

In case of side slits (8, 8b), a passage compartment (10) is formed between them, so that the introduction of the new media through one of the slits (8, 8b) determines the exit of the previous media through the other slit (8, 8b). Said function is facilitated by both the measurement of said chamber (10), which may be provided with a slope (10a) to conduct the media as contained to the exit slit (8, 8b), both for using specific devices (9, 11), be them in the shape of a manually activated button (9), be them in the shape of a display (11) provided with a slope (11a) and flexible area (11b) for folding or cutting.

## Claims

1. Message-carrying device for coupling to a handrail of a public transport vehicle, having an integrated support handle for passengers, provided with a passage compartment between side slits for access and exit for printed media, wherein the passage compartment is provided with a compartment in the form of a cavity or recess where the media is received and lodged; **characterised by** further comprising a manual-pressure activatable guiding device (9, 11) with a slope (9a,11a), which displaces and guides the media present in the passage compartment to the exit line of the slide slit for printed media substitution by insertion of another printed media.

2. Message-carrying device provided with a passage compartment between side slits for access and exit for printed media according to claim 1,
wherein the manual-pressure activatable guiding device is a button-shaped device (9) provided with a slope (9a) such that the pressing of said button-shaped device (9) provided with a slope (9a) conducts the printed media between the access and exit slits (8, 8b) for the printed media substitution by insertion of another printed media.

3. Message-carrying device provided with a passage compartment between side slits for access and exit for printed media according to claim 1,
wherein the manual-pressure activatable guiding device is a transparent sheet (11), provided with a slope (11a) such that pressure exerted on a tapered section (11b) of said transparent sheet conducts the printed media between the access and exit slits (8, 8b) for the printed media substitution by insertion of another printed media.

4. Message-carrying device provided with a passage compartment between side slits for access and exit for printed media according to any of the previous claims, wherein the showcase (1) is made monoblock or double face.

5. Message-carrying device provided with a passage compartment between side slits for access and exit for printed media according to any of the previous claims, wherein the passage compartment (10) comprises a slope (10a) for conducting the printed media between the access and exit slits (8, 8b) for the printed media substitution by insertion of another printed media.

## Patentansprüche

1. Haltevorrichtung für Nachrichten zur Befestigung an einer Griffstange in einem Fahrzeug des öffentlichen Nahverkehrs, die über einen integrierten Haltegriff für Fahrgäste sowie über ein Einschubfach zwischen zwei Seitenschlitzen für das Einführen und Entnehmen von Printmedien verfügt, wobei das Einschubfach mit einem Fach in Form einer Aussparung oder Vertiefung zur Aufnahme und Fixierung des Printmediums ausgestattet ist;
**gekennzeichnet dadurch, dass** sie zusätzlich über eine durch manuellen Druck aktivierbare Führungsvorrichtung (9, 11) mit einer Neigung (9a, 11a) verfügt, die das im Einschubfach befindliche Printmedium führt und zur Austrittsöffnung des Seitenschlitzes bewegt um Printmedien durch das Einführen eines anderen Printmediums auszutauschen.

2. Haltervorrichtung für Nachrichten mit einem Einschubfach mit zwei Seitenschlitzen zum Einführen und Entnehmen von Printmedien gemäß Anspruch 1,
wobei die durch manuellen Druck aktivierbare Führungsvorrichtung eine knopfförmige Vorrichtung (9) ist, ausgestattet
mit einer Neigung (9a), sodass die besagte knopfförmige Vorrichtung (9) mit Neigung beim Vorbeiführen
(9a) das Printmedium zwischen die Auf- und Entnahmeschlitze (8, 8b) für das durch Einführen eines anderen Printmediums zu ersetzende Printmedium führt.

3. Haltervorrichtung für Nachrichten mit einem Einschubfach mit zwei Seitenschlitzen zum Einführen und Entnehmen von Printmedien gemäß Anspruch 1,
wobei die durch manuellen Druck aktivierbare Führungsvorrichtung eine durchsichtige Platte (11) ist, ausgestattet
mit einer Neigung (11a), sodass der auf einen verjüngten Bereich besagter durchsichtigen Platte ausgeübter Druck (11b)
das Printmedium zwischen die Schlitze zum Einführen und Entnehmen (8, 8b) führt,
um das Printmedien durch das Einführen eines anderen Printmediums auszutauschen.

4. Haltevorrichtung für Nachrichten mit einem Einschubfach mit zwei Seitenschlitzen zum Einführen und Entnehmen von Printmedien gemäß allen vorherigen Ansprüchen, wobei das Sichtfach (1) als Monoblock oder doppelseitig ausgeführt ist.

5. Haltevorrichtung für Nachrichten ausgestattet mit einem Einschubfach mit zwei Seitenschlitzen zum Einführen und Entnehmen von Printmedien gemäß allen vorherigen Ansprüchen, wobei das Einschubfach
(10) über eine Neigung (10a) verfügt, um das
Printmedium zwischen die Auf- und Entnahmeschlitze (8, 8b) zu führen, um das Printmedium durch Einführen eines anderen Printmediums zu ersetzen.

## Revendications

1. Dispositif de transport de message à acopler à la rampe d'un véhicule de transport public, disposant d'une poignée d'appui pour les passagers, fourni avec un compartiment de passage entre des fentes latérales permettant l'entrée et la sortie de médias imprimés, dans lequel le compartiment de passage est fourni avec un compartiment en forme de cavité ou de renfoncement dans lequel le média est reçu et guardé ;
**caractérisé en ce qu'**il comprend en outre, un dispositif de guidage activable par pression manuelle (9, 11) avec une inclinaison (9a, 11a), qui déplace et guide le média se trouvant dans le compartiment de passage jusqu'à la ligne de sortie de la fente latérale pour le remplacement du média imprimé par insertion d'un autre média imprimé.

2. Dispositif de transport de message fourni avec un compartiment de passage entre des fentes latérales permettant l'entrée et la sortie de médias imprimés selon la revendication 1,
dans lequel le dispositif de guidage activable par pression manuelle est un dispositif en forme de bouton (9) fournit
avec une inclinaison (9a) telle que le fait d'appuyer sur ledit dispositif en forme de bouton (9) fournit avec une inclinaison
(9a) conduit le média imprimé entre les fentes d'entrée et de sortie (8, 8b) pour le remplacement du média imprimé par insertion d'un autre média imprimé.

3. Dispositif de transport de message fourni avec un compartiment de passage entre des fentes latérales permettant l'entrée et la sortie de médias imprimés selon la revendication 1,
dans lequel le dispositif de guidage activable par pression manuelle est une plaque transparente (11), fournie
avec une inclinaison (11a) telle qu'une pression exercée sur une section conique (11b) de ladite plaque transparente
conduit le média imprimé entre les fentes d'entrée et de sortie (8, 8b) pour le remplacement du média imprimé par insertion d'un autre média imprimé.

4. Dispositif de transport de message fourni avec un compartiment de passage entre des fentes latérales permettant l'entrée et la sortie de médias imprimés selon l'une quelconque des revendications antérieures, dans lequel la devanture (1) est faite en monobloc ou double face.

5. Dispositif de transport de message fourni avec un compartiment de passage entre des fentes latérales permettant l'entrée et la sortie du média imprimé selon l'une quelconque des revendications antérieures, dans lequel le compartiment de passage
(10) comprend une inclinaison (10a) pour conduire le média imprimé entre les fentes d'entrée et de sortie (8, 8b) pour le remplacement du média imprimé par insertion d'un autre média imprimé.
